# EUROPEAN PATENT SPECIFICATION

(11) **EP 3 386 313 B1**
(45) Date of publication and mention of the grant of the patent: **16.10.2019**
(21) Application number: 15819787.1
(22) Date of filing: 11.12.2015
(51) Int. Cl.: A23F 5/24, A23F 5/26, A23F 3/40, A23F 5/28, A23F 5/36

(54) **A PROCESS FOR PRODUCTION OF A CONCENTRATED COFFEE PRODUCT**
VERFAHREN ZUR HERSTELLUNG EINES KONZENTRIERTEN KAFFEEPRODUKTS
PROCÉDÉ POUR LA PRODUCTION D'UN PRODUIT À BASE DE CAFÉ CONCENTRÉ

(43) Date of publication of application: 17.10.2018
(73) Proprietor: GEA Process Engineering A/S, 2860 Søborg (DK)
(72) Inventor: HARALDSTED, Henrik, 3520 Farum (DK); LASSEN, Steen, 2800 Kongens Lyngby (DK)
(74) Representative: AWA Denmark A/S
(86) International application number: PCT/DK2015/050390
(87) International publication number: WO 2017/097303

(56) References cited:
- CA-A1- 2 084 572
- DK-A1- 201 570 098
- DK-A1- 201 570 234
- US-A1- 2003 026 883

## Description

### Introduction

The present invention is defined by the claims and relates to a method for the production of a concentrated coffee product and a coffee product produced by said method. The invention provides a higher yield of the coffee bean, i.e. a higher amount of the solid content of the roast and ground coffee bean eventually appears in the concentrated coffee product. In a certain aspect of the present invention new properties of the coffee drink is provided.

### Background art

Spent coffee grounds are the side product of producing coffee. Traditionally, the spent grounds have been considered waste, which needs to be disposed of. US 2003/0026883 A1 discloses a process for producing an instant concentrated coffee product, the process comprising the steps of adding spent coffee grounds having an average particle size comprised between 74 and 841 µm (200-20 US mesh) to a coffee concentrate (roast ground coffee beans) in the weight ratio 10:1 to 200:1 = roast ground coffee:spent coffee grounds.

GB 1 372 466 describes a method for drying wet spent coffee grounds to remove moisture there from. The wet spent coffee grounds are entrained in a hot gas stream passing through a rotary drum drier to remove moisture there from and transport them through the drum. Grounds from which moisture has been removed to a desired level pass out of the drum drier with the hot gas stream. The dried spent coffee grounds obtained may be used, for example as fertilisers, soil conditioners, fuel, a constituent of animal feeding stuffs, spacings in abrasives, and a source of oil.

EP 1 844 661 suggests applying coffee derived material, such as spent coffee grounds, for stabilising enzyme compositions. The stabilized enzyme compositions are especially useful in the production of soluble coffee from roast coffee solids.

EP 547 698 relates to the removal of lipids from spent coffee grounds using certain lipophilic solvents or series of solvents. The defatted spent coffee grounds act as an adsorbent for bitter coffee flavours and burnt coffee aromas. This adsorbent can be added to roast ground coffee, preferably low quality or dark roasted coffee, to reduce burnt aromas and bitter flavours associated with the corresponding brewed coffee or coffee extract.

EP 363 529 suggests a process for hydrolysing a partially extracted roast and ground coffee, such as spent grounds from a commercial coffee percolation system, in a reactor, preferably a plug flow reactor, by a high temperature short time process without the introduction of any added acid catalyst. The hydrolysate, thus obtained, is useful for increasing the soluble coffee solids content in combination with an aqueous extract of roasted coffee. The spent coffee grounds are subjected to a temperature from 200°C to 260°C for a period of time ranging from 1 minute to 15 min to cause solubilisation and then hydrolysis of the native mannan oligomers.

The object of the present invention is to find useful applications for spent coffee grounds. In addition, it is an object of the invention to device a process for increasing the yield of roast and ground coffee beans. Furthermore, it is an object of the present invention to design coffee products having new properties. Specifically, the object of the present invention is to suggest fibre enriched coffee products having an improved digestive effect and/or mouth feel. A further object of the invention is to stretch the taste of a drink prepared from a coffee concentrate without noticeable dilution of the strength or the richness of the taste.

### Summary of the invention

The present invention relates to a process for production of a concentrated coffee product, comprising the steps of:
a) providing a coffee concentrate obtained from roast and ground coffee beans, and
b) adding spent coffee grounds having an average particles size of 0.1-50 µm to the coffee concentrate in an amount of 10 % by weight or more, based on the solid content of the coffee concentrate; wherein the coffee concentrate is a liquid coffee extract, which after addition of the spent coffee grounds is dried to produce an instant coffee product.

The present invention is defined in scope by claims 1 to 18. The inventors of the present invention have surprisingly discovered that spent coffee grounds when comminuted to a certain size may be used as an additive in a coffee product. The addition of the comminuted spent coffee grounds to the coffee concentrate increases the yield of the roast and ground coffee bean. In addition, new properties of the coffee drink is obtained in certain embodiments, including a fibre enriched coffee drink and a tailored mouth feel.

The coffee concentrate used in step a) is in a dried or liquid form. In a preferred aspect of the invention, the coffee concentrate is a liquid coffee extract, which after addition of the spent coffee grounds, is dried to produce an instant coffee product. Thus, the liquid coffee concentrate contains solids extracted from roast and ground coffee beans in admixture with any amount of water. The drying of the liquid coffee extract may be performed with processes normally used in the field, including spray drying, freeze drying, fluid bed drying, etc.

The liquid coffee extract may be obtained by any method known in the art. Notably, the liquid coffee extract is obtained by contacting roast coffee with an aqueous liquid, and separating the liquid coffee extract from the spent remains. According to a conventional method the liquid coffee extract is obtained in a process according to which roast and ground coffee beans are contacted with the aqueous liquid in a percolation column. A series of percolations columns operated continuously or semi-continuously may be used for producing the liquid coffee extract.

According to an alternative method, liquid coffee extract and/or the spent coffee grounds are obtained by a process comprising the steps of:
i. Contacting roasted coffee beans and water,
ii. Milling the mixture of roast coffee beans and water in a pressurised chamber, and
iii. Separating the milled mixture in a liquid coffee extract and spent coffee grounds.

The alternative method preserves the amount of volatile coffee aroma components. The alternative method is disclosed in more detail in Danish patent application No. PA 2015 70234, published 22 April 2015.

In certain embodiments of the present invention it may be advantageous to perform the first contact between an aqueous liquid and the roast coffee beans a temperature of 80°C or less. The relative low temperature avoids or reduces the formation or extraction of 5-hydroxymethyl furfural (5-HMF) and other undesirable taste compounds.

According to another embodiment of the invention, the liquid coffee extract is obtained by reconstitution of an instant coffee with an aqueous liquid. Alternatively, the coffee concentrate is an essentially dry coffee powder. The dry coffee powder may be mixed with moist or dry spent coffee grounds.

The addition of the spent coffee grounds to the dry coffee powder may be performed as a dry mixing. In a dry mix, the powder particles remain distinct and the risk is that an uneven distribution of the two types of powder occurs. The uneven distribution may result in a variation of the taste and/or mouth feel between batches or individual tastings. Therefore, in some instances, the spent coffee grounds are adhered to the coffee powder, by e.g. moistening the essentially dry coffee powder before the addition of the spent coffee grounds. The moistening of the dry coffee powder allows for the attachment of the spent coffee grounds particles to the surface of the coffee powder. Subsequent to the addition of spent coffee grounds to the moist coffee powder the admixture may be dried in e.g. a fluid bed. The adhesion between the coffee powder and the spent coffee grounds ensures a more uniform product with reduced variation between batches and tastings.

While the spent coffee grounds have an average particles size of 0.1 to 50 µm, it is generally preferred that the average particles size of the added spent coffee grounds is 1, 2, 3, 4 µm or above. While it is possible to comminute the spent coffee grounds to average particles sizes beyond 4 µm it generally not needed in order to obtain the intended effect of fibre enrichment and coffee drink properties. Furthermore, internal experiments have shown that solutions containing particles with an average particles size of 3-4 µm and below were blurred to the human eye. In specific embodiments of the present invention, the average particles sizes of the spent coffee grounds are 5 µm and above, such as 10 µm, 20 µm, 30 µm, or 40 µm and above. According to the invention, the average particles sizes are not above 50 µm to avoid a too coarse mouth feeling.

In an embodiment of the present invention, the spent coffee grounds are added to the coffee concentrate together with roast and ground coffee beans to modify the taste, mouth feel, and yield. In particular, roast and ground coffee beans are added to the coffee concentrate prior to, simultaneous with, or subsequent to the addition of spent coffee grounds. While the roast and ground coffee beans may be added in any proportion relative to the amount of spent coffee grounds, according to the invention, roast and ground coffee beans are added to the coffee concentrate in an amount of 10% by weight or more based on the weight of spent coffee grounds. In some embodiments, the amount of roast and ground coffee is 20% by weight or more, 30% by weight or more, or 40% by weight or more based on the weight of the spent coffee grounds. Usually, the amount of roast and ground coffee beans does not exceed 90% by weight based on the weight of the spent coffee grounds. Suitably, the amount of roast and ground coffee beans does not exceed 400% by weight, such as 300% by weigh, notably 200% by weight based on the weight of the spent coffee grounds. In a preferred embodiment, the amount of roast and ground coffee beans essentially equals the amount of spent coffee grounds. Surprisingly, experiments have shown that addition of both roast and ground coffee beans and spent coffee grounds to a coffee extract enhances the perception of the coffee taste.

Spent coffee grounds normally have a substantial amount of particles sizes above 1 mm. To obtain the particles sizes used in the present invention the spent coffee grounds are typically comminuted prior to the addition to the coffee concentrate. The comminuted spent coffee grounds may be added directly to the coffee concentrate. In another embodiment of the invention, comminuted spent coffee grounds are pre-treated in any order by one or more of hydrolysis, heat treatment and/or steam explosion prior to the addition to the coffee concentrate.

The hydrolysis may be performed with acids, high temperature and/or enzymes. Generally, it is suitable that the hydrolysis is performed by an enzyme, such as a hydrolysing enzyme selected from the group comprising cellulase, xylanase, hemicellulase, esterase, lipase, or any combination of these enzymes. The application of enzymes in the hydrolysis process improves the over-all yield and does not result in the formation of off-flavours as experienced with heat treatment. The application of enzymes in coffee extraction is the subject of Danish patent application No. PA 2015 70098, published 24 February 2015.

When steam explosion is performed spent coffee grounds are released into temperature and pressure conditions which will disrupt the cell wall of the spent coffee grounds. The disrupture will display the interior of the plant cell for further extraction of the soluble content or for access of enzymes. Generally, steam explosion is performed in the temperature range of 50-170°C, at a pressure of 0.1 to 10 bar for 0.1 to 5 hours. More specifically, according to a preferred embodiment, pre-treatment comprises a temperature regimen comprising, in any order
- A low temperature treatment period in the temperature range of 25 to 150°C for 1 min to 24 hours, and
- A high temperature treatment period in the temperature range of 100 to 200°C for 1 min to 24 hours.

The spent coffee grounds may provide different properties to final coffee drink depending on their average size. Thus, when spent coffee grounds added to the liquid coffee extract have an average particles size of 2-25 µm, a smooth and creamy mouth feel is normally obtained. If the spent coffee grounds added to the liquid coffee extract have an average particles size of 25-50 µm the same sensation as cafetiere coffee from a press coffee maker is experienced. Spent coffee grounds added to the liquid coffee extract having an average particles size of 50-100 µm impart a coarse or rough mouth feel, which may be desirable for some consumer segments.

The spent coffee grounds may be added to the coffee concentrate in any amount or proportion. However, to obtain a satisfactory effect on the yield, according to the invention, spent coffee grounds are added to the coffee concentrate in an amount of 10% by weight or more, based on the solid content of the coffee concentrate. In certain embodiments of the invention, the spent coffee grounds are added to the coffee concentrate in an amount of 20% by weight or more, or 30% by weight or more. Usually, spent coffee grounds are added to the coffee concentrate in an amount of 60% by weight or less, based on the solid content of the coffee concentrate. In a certain aspect of the invention, the spent coffee grounds are added to the coffee concentrate in an amount of 50% by weight or less, such as 40% by weight or less, and suitably 30% or less, based on the solid content of the coffee concentrate.

In a certain aspect of the invention water is used instead of the coffee concentrate in the coffee product of the present invention. Thus, the process for production of a coffee product comprises the steps of providing water and adding spent coffee grounds having an average particles size of 0.1-50 µm to the water.

Surprisingly, the taste of the coffee product is mild and pleasant.

The present invention also relates to a concentrated coffee product obtained by the process according to at least claim 1.

### Detailed description of the invention

According to the present invention the roast and ground coffee beans form the basis for the coffee concentrate used as a starting material. The roast and ground coffee is produced from green coffee beans. Green coffee beans possess the potential to develop the characteristic flavours of coffee by changing colour, taste, smell and density during roasting. These roasted coffee beans may be used as primary products for the manufacturing of special sorts of coffee and may also be used as ingredients for the manufacturing of coffee-based food products.

Green coffee beans are obtained from the ripe coffee berries, which are produced by several species of the coffee plant Coffea. Coffea is a genus of flowering plants in the Rubiaceae family, which grow as small bushes or trees in tropical regions. The green beans and the coffee berry pulp may be obtained from any species of the coffee plant, including the species of Robusta (Robusta), Arabica (Arabica), Coffea liberia, C. excelsa, C. stenophylla, C. mauritiana. C. racemosa and mixtures thereof, or are derived from interspecies crossing between any of said coffee species. Preferably, the green beans and the coffee berry pulp are obtained from the species of Robusta (Robusta), Arabica (Arabica) or mixtures thereof. In a preferred embodiment, the green bean is obtained from the species Robusta. Arabica is usually grown between 800 meter and 1500 meter above sea level, but can be also cultivated at heights between sea level and 2800 meter above sea level. Arabica can tolerate low temperatures, but not frost, and is optimally cultivated at temperatures around 20°C. Growing Robusta requires less intensive care, yields a higher amount of ripe coffee berries and is therefore cheaper to maintain compared to Arabica. Furthermore, Robusta has immunity or great resistance to the leaf rust by hemileya. Approximately 40% of the coffee produced in the world is Robusta.

The coffee berries ripen around eight months after the emergence of the flower by changing their colour from green to red. Once ripe, the coffee berries are picked and processed in two ways: I. Dry method. The berries are dried first and hulled afterwards, to obtain "pergamino" beans; or 2. Wet method. The husk is removed first to obtain the beans with pulp, which are then "washed" in water for 24 or 48 hours before drying to obtain the coffee beans. Both methods may be applied in the present invention.

The drying of the coffee beans or pergamino beans is typically performed outdoors by spreading the berries or beans on large concrete plates or on suitable netting, allowing for aeration, and drying them by exposure to sun radiation.

Dried coffee beans possess the potential to develop special aromas and flavours after roasting. Both the Robusta and Arabica coffee species are of particular relevance, since they present different organoleptic traits. Arabic coffee beverages present a subtle mild aroma and relatively low caffeine content when compared to Robusta coffees. Robusta coffees have higher caffeine contents and a stronger body in taste.

The differences in their aromas make these two species suitable for the preparation of various kinds of coffee beverages. While Arabica coffee products are typically used for mild coffees, Robusta coffee products on the other hand are usually used as supplements for instant coffee.

The chemical reactions during roasting are complex and not fully understood. It is assumed that during roasting of green coffee beans free amino acids could react with sugars, such as glucose and fructose, in the so-called Maillard reaction to form substances that are mainly perceived as positive aromatic substances by the consumers. The green coffee beans may be roasted and ground according to known means. The coffee beans are usually roasted in an oven at temperatures between 240°C and 275°C for time periods ranging from about 3 to 30 minutes. A commonly used roasting plant in the industry is rotating cylinders containing the green beans and hot combustion gases. When the bean temperature reaches typically 165-200°C the roasting begins, accompanied by a popping sound similar to that produced by popcorn. These batch cylinders take about 8-15 min to complete the roasting depending on the initial moisture and desired final colour. Coffee roasting using a fluidized bed is also commonly used.

The roasted beans are then ground to enhance extraction with water. Grinding reduces the beans to 0.2-5.0 mm depending on the extraction process. Traditionally, roasted beans are ground by dry milling, but wet milling is also an option.

In general, any equipment capable of wet milling the roasted beans and the spent coffee grounds to the required particle size range is acceptable and this may include a combination of rotor-stator devices, media mills containing grinding media, cone mills or other shearing devices such as ultrasonic devices and cavitation devices. Further, for a given equipment type, the performance and resulting spent coffee grounds particle size can be varied by operating parameters such as rotational speed, throughput rate, size and shape of media (e.g. in a micro mill) and screen size in a rotor/stator or similar shearing device. A rotor/stator mill, for example Admix Boston Shearmill™ or Ross Model ME-430XS-6 (Charles Ross & Sons, Hauppage NY, USA), can be used for the milling, although other mills, for example colloid mills such as Charlotte SD-2 (Bradman-Lake, Charlotte NC, USA) or Dispx DRS-2000-5 (IKAUSA), are also suitable.

In an alternative embodiment of the present invention a coffee extract or concentrate is produced by a process comprising the steps of providing a mixture of roast coffee beans and water, milling the mixture of roast coffee beans and water in a pressurised chamber, and separating the milled mixture in to a liquid coffee extract and spent coffee grounds for example by percolation.

The submersion of the roasted beans in water during the milling results in a substantial amount of volatile aroma components being dissolved in the water and appearing in the extract instead of being liberated to the ambient air. In addition, the closed pressurised chamber ensures that the solubility of the volatile water soluble aroma components is increased and that the volatile components are maintained in the same compartment without escaping to the surroundings. Furthermore, oxidisation is avoided.

The use of a pressurised chamber for milling the mixture of roast coffee beans and water also reduces the tendency of foaming. Probably due to the gas from the CO₂ release and the protein content in the beans, which is around 10% by weight, the wet grinding process may result in the build-up of foam during milling. The foam formation may result in process stop and subsequent laborious cleaning of the equipment. A higher-than-ambient pressure prevents CO₂ bubble release and thus reduces the foam formation. Alternative methods for reducing the foaming are foam control devices and excipients.

During the milling step CO₂ is liberated. The liberated CO₂ may be vented out of the mixing or the milling chamber. In a certain aspect it is preferred, however, that a major amount of the CO₂ liberated from the roast coffee beans during the mixing and/or the milling process steps is maintained together with the mixture of roast coffee and water extract. In a preferred aspect essentially the entire amount of CO₂ is maintained in the milling chamber during the milling process.

After the milling procedure, the pressure of the milled mixture is reduced. Suitably, the pressure is reduced to the ambient pressure. By the pressure reduction, CO₂ and other volatile components may be collected or discharged to surroundings. In a certain embodiment the gas liberated by the reduction of the pressure is passed through a freezing trap to collect volatile aroma components. The reduction of the pressure may be performed prior to, simultaneously with or subsequent to a reduction in temperature, if necessary. The temperature may, if necessary, be reduced to between 0 and 30°C prior to the separation step. The collected volatile aroma component may be added to the final concentrated coffee product to enhance the sensoric experience.

When the spent coffee grounds are pre-treated by hydrolysis, they may be hydrolysed using a hydrolysing enzyme to produce a second extract and spent remains. The second extract may be added to the first extract of the invention, optionally after concentration and/or drying of the second extract to obtain a combined coffee concentrate.

The hydrolysing enzymes used are able to decompose one or more of the various chemical constituents of the spent coffee grounds, such as carbohydrates, e.g. cellulose, hemicellulose, xylan, and starch; lignin; proteins; lipids; nucleic acids; etc. The decomposition products are preferably soluble in water. According to a preferred aspect, the hydrolysing enzyme is selected among carbohydrate hydrolysing enzymes or carboxylic ester hydrolysing enzymes or any combination of such enzymes.

The carbohydrate hydrolysing enzyme may be chosen from a large group of commercially available enzymes. In an embodiment of the invention the carbohydrate hydrolysing enzyme is selected from the group comprising cellulase, xylanase, hemicellulase, or any combination of these enzymes. Preferably, the enzymes used are of the food grade type.

Similarly, the carboxylic ester hydrolysing enzyme may be chosen from a large group of commercially available enzymes. In an embodiment of the invention the carboxylic ester hydrolysing enzyme is selected from esterase, lipase, or any combination thereof.

The conditions for the enzymatic hydrolysis reaction may vary depending on the type and activity of enzyme used, the temperature of the reaction media, the pH etc. In a preferred embodiment, the hydrolysis step is performed on an aqueous suspension of spent coffee grounds at a temperature in the range of 40-80°C, at pH 4-7, in a time range of 1-16 hours.

To assist the enzymatic reaction it may be suitable that an auxiliary agent is present during the hydrolysis step. Examples of auxiliary agents include acidity controllers, surfactants, chelators, co-factors, etc. In a certain aspect of the invention the auxiliary agent is a surfactant. A surfactant improves the yield significantly, and it might even be derived from coffee as disclosed in US 8,603,562.

The spent coffee grounds may be pre-treated prior to the enzymatic hydrolysis. The pre-treatment may be performed to make it easier for the enzymes to access their substrate. The pre-treatment may involve exposure of the interior of the plant cells and/or loosening of the lignin from the cellulose. In a preferred embodiment, the pre-treatment involves
- addition of water to the spent coffee grounds,
- steam exploding the spent coffee grounds, and
- separating in an intermediate extract and pre-treated spent coffee grounds.

The intermediate extract from the steam explosion procedure may be used in the coffee concentrate, purified, or may be discarded or used for another application if it contains too many off-flavours. Generally, however, the steam explosion procedure is controlled so that the intermediate extract, either as is, concentrated and/or dried, is added to the combined coffee concentrate.

If only a "mild" temperature steam explosion is performed the amount of off-flavours are generally low and acceptable. Therefore, the intermediate extract can be added to the combined extract. Preferred conditions for the steam explosion involves that the steam explosion is performed in the temperature range of 50-170°C, at a pressure of 0.1 to 10 bar for 0.1 to 5 hours.

Alternative methods to steam explosion may involve freezing or homogenisation.

To loosen up the structure of the lignocellulose and to partially break down the structure of the hemicellulose it may be advantageously to use a certain temperature regimen for the pre-treatment of the spent grounds. The temperature regimen may comprise in any order
- A low temperature treatment period in the temperature range of 25 to 150°C for 1 min to 24 hours, and
- A high temperature treatment period in the temperature range of 100 to 200°C for 1 min to 24 hours.

The steam explosion may be performed separately or may be integrated in the temperature regimen. In a preferred aspect of the invention, the steam explosion is performed during the high temperature treatment period.

In between the steam explosion and enzymatic treatment steps washing procedures are beneficial since they will increase the efficiency of the enzymes. Such procedures remove the enzyme inhibitors and enhance the process. The washing water may be added to the combined extract.

After the enzymatic hydrolysis, the second extract may be post-treated either by
- Heating to a temperature above 70°C in a time sufficient to inactivate the enzyme, typically 120°C for 10-30 min, and possibly remove coagulated enzymes, or
- Membrane filtering to remove the enzyme, which optionally is re-used.

In the enzymatic hydrolysis step the spent coffee grounds may be further divided into smaller particles to ease the access for the enzymes. In a preferred aspect the spent coffee grounds are finely divided into an average particle size in the range of 2-1000 µm, preferably to 10-500 µm prior to the enzyme treatment. The ground coffee bean may be milled in two or more stages. The second milling may be performed as a wet-milling of the spent coffee grounds prior to enzymatic hydrolysis. The second wet-milling may occur before or after the steam explosion depending on the circumstances. Wet-milling to a mean particle size of 10 to 250 µm is preferred. The cumulative particle size distribution of the wet-milled spent ground coffee comprises about 90% or more of the particles to be below 150 µm, preferably below 100 µm and in some cases below 50 µm.

After optional pre-treatment of the spent coffee grounds they are comminuted if necessary to the desired particles size depending of the desired properties of the final coffee drink prepared from the concentrated coffee product of the invention. Alternatively, the optionally pre-treated spent coffee grounds are added to the coffee concentrate prior to comminuting the spent coffee grounds to the desired particles size. While the average particles size may vary between 0.1 and 100 µm, it is generally whished that the average particles size is less than 50 µm to avoid a too rough mouth feeling.

The separation of the coffee extracts or coffee concentrates at various stages of the present invention from the solid components may be performed by any suitable device, including a centrifugal separator, membrane filtration, or belt filtration. A preferred centrifugal separator is a two phase decanter centrifuge. Suitable decanter centrifuges may be obtained from GEA Westfalia, etc.

### Examples

### Example 1

### Preparation of fine particles of spent coffee grounds

Spent coffee grounds (200 g) from a small scale extractor were mixed with cold water (2500 g) and finely ground for 60 minutes with a high shear mixer to obtain a slurry of 9.3% dry matter containing coffee particles of 30 µm mean size.

### Example 2

### Comparison of coffee products

5 coffee product samples were made with different ratios of instant coffee, roast and ground coffee and/or spent coffee grounds. For the tasting, all 5 coffee products had an equal amount of dry matter (by weight). A panel of 4 persons tasted the 5 different coffee products and noted the nuances of aroma, visual appearance and mouth feel. All products were prepared with 2 g of total dry solids in 100 g water.
Product 1 - 100% commercial instant coffee of good quality.
Product 2 - 80% of instant coffee (Product 1) added 20% fine particles of spent coffee grounds according to example 1.
Product 3 - 100% commercial instant coffee product containing 20% roast & ground coffee.
Product 4 - 90% of commercial instant coffee product containing 10% roast & ground added 10 % fine particles of spent coffee grounds according to example 1.
Product 5 - 100% fine particles of spent coffee grounds according to example 1.

### Comparison of Products 1 and 2 by sensory analysis:

The panellists agreed that it did not dilute the strength and richness of the coffee taste noticeably to replace 20% of the dry solids with fine particles of spent coffee grounds. Moreover, Product 2 had a slightly more round and creamy mouth feel compared to Product 1.

### Comparison of Products 3 and 4 by sensory analysis:

Surprisingly, replacing 10% roast & ground coffee with 10 % fine particles of spent coffee grounds resulted in a positive change in the overall perception according to the sensory panel. For Product 4, a more pleasant and soft mouth feel was noticed as well as a better perception of the actual coffee taste compared to Product 3.

### Sensory analysis of Product 5:

The sensory panel agreed that Product 5 (the pure form of the spent coffee grounds produced in example 1) had a mild, pleasant coffee taste and a smooth mouth feel.

## Claims

1. A process for production of a concentrated coffee product, comprising the steps of:
a) providing a coffee concentrate obtained from roast and ground coffee beans, and
b) adding spent coffee grounds having an average particle size of 0.1-50 µm to the coffee concentrate in an amount of 10 % by weight or more, based on the solid content of the coffee concentrate;
wherein the coffee concentrate is a liquid coffee extract, which after addition of the spent coffee grounds is dried to produce an instant coffee product.

2. The process according to claim 1, wherein the liquid coffee extract is obtained by contacting roast coffee with an aqueous liquid, and separating the liquid coffee extract from the spent remains.

3. The process according to any one of the claims 1 or 2, wherein roast and ground coffee beans are contacted with the aqueous liquid in a percolation column.

4. The process according to any one of the claims 1 or 2, wherein the liquid coffee extract and/or the spent coffee grounds are obtained by a process comprising the steps of:
i. Contacting roasted coffee beans and water,
ii. Milling the mixture of roast coffee beans and water in a pressurised chamber, and
iii. Separating the milled mixture in a liquid coffee extract and spent coffee grounds.

5. The process according to claim 4, wherein the aqueous liquid prior to contacting with the roast coffee beans is provided with a temperature of 80°C or less.

6. The process according to any one of the claims 1 to 5, wherein the liquid coffee extract is obtained by reconstitution of an instant coffee with an aqueous liquid.

7. The process according to any one of the claims 1 to 6, wherein the average particles size of the added spent coffee grounds is 4-50 µm.

8. The process according to any one of the claims 1 to 7, wherein roast and ground coffee beans are added to the coffee concentrate prior to, simultaneous with, or subsequent to the addition of spent coffee grounds.

9. The process according to claim 8, wherein the roast and ground coffee beans are added to the coffee concentrate in an amount of 5% by weight or more based on the weight of spent coffee grounds.

10. The process according to any one of the claims 1 to 9, wherein the spent coffee grounds are comminuted prior to the addition to the coffee concentrate.

11. The process according to claim 10, wherein the comminuted spent coffee grounds are pre-treated in any order by one or more of hydrolysis, heat treatment and/or steam explosion prior to the addition to the coffee concentrate.

12. The process according to claim 11, wherein the hydrolysis is performed by an enzyme, such as a hydrolysing enzyme selected from the group comprising cellulase, xylanase, hemicellulase, esterase, lipase, or any combination of these enzymes.

13. The process according to claims 11 or 12, wherein the steam explosion is performed in the temperature range of 50-170°C, at a pressure of 0.1 to 10 bar for 0.1 to 5 hours.

14. The process according to any one of the claims 11 to 13, wherein the pre-treatment comprises a temperature regimen comprising, in any order
• A low temperature treatment period in the temperature range of 25 to 150°C for 1 min to 24 hours, and
• A high temperature treatment period in the temperature range of 100 to 200°C for 1 min to 24 hours.

15. The process according to any one of the claims 1 to 14, wherein spent coffee grounds added to the liquid coffee extract have an average particles size of 10-25µm.

16. The process according to any one of the claims 1 to 14, wherein spent coffee grounds added to the liquid coffee extract have an average particles size of 25-50µm.

17. The process according to any one of the claims 1-16, wherein the spent coffee grounds are added to the coffee concentrate in an amount of 60% by weight or less, based on the solid content of the coffee concentrate.

18. Concentrated coffee product obtained according to anyone of the claims 1 to 17.

## Patentansprüche

1. Verfahren zur Herstellung eines konzentrierten Kaffeeprodukts, welches die folgenden Schritte umfasst:
a) die Bereitstellung eines aus gerösteten und gemahlenen Kaffeebohnen erhaltenen Kaffeekonzentrats und
b) die Zugabe von gebrauchtem Kaffeesatz mit einer durchschnittlichen Teilchengröße von 0,1-50 µm zum Kaffeekonzentrat in einer Menge von 10 Gew.-% oder mehr, bezogen auf den Feststoffgehalt des Kaffeekonzentrats,
wobei es sich bei dem Kaffeekonzentrat um einen flüssigen Kaffeeextrakt handelt, der nach der Zugabe des gebrauchten Kaffeesatzes zum Erhalt eines Instant-Kaffeeprodukts getrocknet wird.

2. Verfahren nach Anspruch 1, **dadurch gekennzeichnet, dass** man den flüssigen Kaffeeextrakt erhält, indem man Röstkaffee mit einer wässrigen Flüssigkeit in Kontakt bringt und den flüssigen Kaffeeextrakt von den gebrauchten Resten abtrennt.

3. Verfahren nach einem der Ansprüche 1 oder 2, **dadurch gekennzeichnet, dass** man geröstete und gemahlene Kaffeebohnen in einer Perkulationssäule mit der wässrigen Flüssigkeit in Kontakt bringt.

4. Verfahren nach einem der Ansprüche 1 oder 2, **dadurch gekennzeichnet, dass** man den flüssigen Kaffeeextrakt und/oder den gebrauchten Kaffeesatz durch ein Verfahren erhält, welches die folgenden Schritte umfasst:
i. das Inkontaktbringen von gerösteten Kaffeebohnen mit Waser,
ii. das Mahlen der Mischung aus gerösteten Kaffeebohnen und Wasser in einer Druckkammer und
iii. das Auftrennen der gemahlenen Mischung in einen flüssigen Kaffeeextrakt und gebrauchten Kaffeesatz.

5. Verfahren nach Anspruch 4, **dadurch gekennzeichnet, dass** man die wässrige Flüssigkeit vor dem Inkontaktbringen mit den gerösteten Kaffeebohnen mit einer Temperatur von 80°C oder weniger bereitstellt.

6. Verfahren nach einem der Ansprüche 1 bis 5, **dadurch gekennzeichnet, dass** man den flüssigen Kaffeeextrakt erhält, indem man einen Instant-Kaffee mit einer wässrigen Flüssigkeit rekonstituiert.

7. Verfahren nach einem der Ansprüche 1 bis 6, **dadurch gekennzeichnet, dass** die durchschnittliche Teilchengröße des zugefügten gebrauchten Kaffeesatzes 4-50 µm beträgt.

8. Verfahren nach einem der Ansprüche 1 bis 7, **dadurch gekennzeichnet, dass** man die gerösteten und gemahlenen Kaffeebohnen vor, gleichzeitig mit oder nach der Zugabe des gebrauchten Kaffeesatzes zu dem Kaffeekonzentrat gibt.

9. Verfahren nach Anspruch 8, **dadurch gekennzeichnet, dass** man die gerösteten und gemahlenen Kaffeebohnen in einer Menge von 5 Gew.-% oder mehr, bezogen auf das Gewicht des gebrauchten Kaffeesatzes, zum Kaffeekonzentrat gibt.

10. Verfahren nach einem der Ansprüche 1 bis 9, **dadurch gekennzeichnet, dass** man den gebrauchten Kaffeesatz vor der Zugabe zum Kaffeekonzentrat zerkleinert.

11. Verfahren nach Anspruch 10, **dadurch gekennzeichnet, dass** man den zerkleinerten gebrauchten Kaffeesatz vor der Zugabe zum Kaffeekonzentrat in beliebiger Reihenfolge durch Hydrolyse, Hitzebehandlung und/oder Dampfexplosion vorbehandelt.

12. Verfahren nach Anspruch 11, **dadurch gekennzeichnet, dass** die Hydrolyse mittels eines Enzyms wie einem hydrolysierenden Enzym ausgewählt aus der Cellulase, Xylanase, Hemicellulase, Esterase, Lipase oder eine beliebige Kombination dieser Enzyme umfassenden Gruppe erfolgt.

13. Verfahren nach Anspruch 11 oder 12, **dadurch gekennzeichnet, dass** die Dampfexplosion in den Temperaturbereich von 50-170°C bei einem Druck von 0,1 bis 10 bar über 0,1 bis 5 Stunden erfolgt.

14. Verfahren nach einem der Ansprüche 11-13, **dadurch gekennzeichnet, dass** die Vorbehandlung ein Temperaturprotokoll umfasst, das in beliebiger Reihenfolge
• einen Niedrigtemperatur-Behandlungszeitraum im Temperaturbereich von 25 bis 150°C über 1 min bis 24 Stunden und
• einen Hochtemperatur-Behandlungszeitraum im Temperaturbereich von 100 bis 200°C über 1 min bis 24 Stunden
umfasst.

15. Verfahren nach einem der Ansprüche 1 bis 14, **dadurch gekennzeichnet, dass** der dem flüssigen Kaffeeextrakt zugesetzte gebrauchte Kaffeesatz eine durchschnittliche Teilchengröße von 10-25 µm aufweist.

16. Verfahren nach einem der Ansprüche 1 bis 14, **dadurch gekennzeichnet, dass** der dem flüssigen Kaffeeextrakt zugesetzte gebrauchte Kaffeesatz eine durchschnittliche Teilchengröße von 25-50 µm aufweist.

17. Verfahren nach einem der Ansprüche 1-16, **dadurch gekennzeichnet, dass** man den gebrauchten Kaffeesatz in einer Menge von 60 Gew.-% oder weniger, bezogen auf den Feststoffgehalt des Kaffeekonzentrats, zum Kaffeekonzentrat gibt.

18. Konzentriertes Kaffeeprodukt, erhalten nach einem der Ansprüche 1 bis 17.

## Revendications

1. Procédé pour la production d'un produit de café concentré, comprenant les étapes de :
a) mise à disposition d'un concentré de café obtenu à partir de grains de café torréfiés et moulus,
et
b) ajout des résidus de marc de café possédant une grosseur moyenne de particules de 0,1 à 50 µm au concentré de café en une quantité supérieure ou égale à 10% en poids, sur la base de la teneur en solides du concentré de café ;
le concentré de café étant un extrait liquide de café, qui, après ajout des résidus de marc de café, est séché pour produire un produit de café instantané.

2. Procédé selon la revendication 1, l'extrait liquide de café étant obtenu par la mise en contact de café torréfié avec un liquide aqueux, et la séparation de l'extrait liquide de café des résidus épuisés.

3. Procédé selon l'une quelconque des revendications 1 et 2, les grains de café torréfiés et moulus étant mis en contact avec le liquide aqueux dans une colonne de percolation.

4. Procédé selon l'une quelconque des revendications 1 et 2, l'extrait liquide de café et/ou les résidus de marc de café étant obtenus par un procédé comprenant les étapes de :
i. mise en contact de grains de café torréfiés et d'eau,
ii. mouture du mélange de grains de café torréfiés et d'eau dans une chambre pressurisée, et
iii. séparation du mélange moulu en un extrait liquide de café et des résidus de marc de café.

5. Procédé selon la revendication 4, la température du liquide aqueux avant la mise en contact avec les grains de café torréfiés étant inférieure ou égale à 80°C.

6. Procédé selon l'une quelconque des revendications 1 à 5, l'extrait liquide de café étant obtenu par reconstitution d'un café instantané avec un liquide aqueux.

7. Procédé selon l'une quelconque des revendications 1 à 6, la grosseur moyenne de particules des résidus de marc de café ajouté étant de 4 à 50 µm.

8. Procédé selon l'une quelconque des revendications 1 à 7, des grains de café torréfiés et moulus étant ajoutés au concentré de café avant, simultanément à, ou après l'ajout de résidus de marc de café.

9. Procédé selon la revendication 8, les grains de café torréfiés et moulus étant ajoutés au concentré de café en une quantité supérieure ou égale à 5% en poids sur la base du poids des résidus de marc de café.

10. Procédé selon l'une quelconque des revendications 1 à 9, les résidus de marc de café étant broyés avant l'ajout au concentré de café.

11. Procédé selon la revendication 10, les résidus de marc de café broyés étant prétraités dans un ordre quelconque par un ou plusieurs parmi une hydrolyse, un traitement thermique et/ou un vapocraquage, avant l'ajout au concentré de café.

12. Procédé selon la revendication 11, l'hydrolyse étant réalisée par une enzyme, telle qu'une enzyme hydrolysante choisie dans le groupe comprenant une cellulase, une xylanase, une hemicellulase, une estérase, une lipase, ou une quelconque combinaison de ces enzymes.

13. Procédé selon la revendication 11 ou 12, le vapocraquage étant réalisé dans la plage de température de 50 à 170°C, à une pression de 0,1 à 10 bars pendant 0,1 à 5 heures.

14. Procédé selon l'une quelconque des revendications 11 à 13, le prétraitement comprenant un régime de température comprenant, dans un ordre quelconque :
• une période de traitement à basse température dans la plage de température de 25 à 150°C pendant 1 min à 24 heures, et
• une période de traitement à haute température dans la plage de température de 100 à 200°C pendant 1 min à 24 heures.

15. Procédé selon l'une quelconque des revendications 1 à 14, les résidus de marc de café ajoutés à l'extrait liquide de café possédant une grosseur moyenne de particules de 10 à 25 µm.

16. Procédé selon l'une quelconque des revendications 1 à 14, les résidus de marc de café ajoutés à l'extrait liquide de café possédant une grosseur moyenne de particules de 25 à 50 pm.

17. Procédé selon l'une quelconque des revendications 1 à 16, les résidus de marc de café étant ajoutés au concentré de café en une quantité inférieure ou égale à 60% en poids, sur la base de la teneur en solides du concentré de café.

18. Produit de café concentré obtenu selon l'une quelconque des revendications 1 à 17.
